# EUROPEAN PATENT APPLICATION

(11) **EP 2 180 710 A1**
(43) Date of publication of application: **28.04.2010**
(21) Application number: 09172039.1
(22) Date of filing: 02.10.2009
(51) Int. Cl.: H04N 7/24

(54) **Method for processing a stream of multiplexed packets transporting multimedia data according to an MPEG-2 type format**

(30) Priority: 27.10.2008 FR 0857296
(71) Applicant: Thomson Licensing, 92443 Issy-les-Moulineaux Cedex (FR)
(72) Inventor: Gravoille, Pascal, 92100, Boulogne (FR); Lemonnier, Philippe, 92100, Boulogne (FR); Beroul, Yannick, 92100, Boulogne (FR)
(74) Representative: Berthier, Karine

(57) **Abstract**

The present invention relates to a method for processing a stream (10) of multiplexed packets transporting multimedia data according to an MPEG-2 type format, this stream (10) being transmitted at a high bitrate to an intermediary network (12) having low bitrate transmission channels (14₁, 14₂, ...14ₙ), **characterized in that** the high bitrate stream (10) is treated upstream of the intermediary network (12) carrying out the following steps:
- a step of demultiplexing the high bitrate stream (10) in order to insert packets (1, 2,...44) of data in the low bitrate stream (16₁, 16₂, ...16ₙ) transmitted by the intermediary channels (14₁, 14₂, ... 14ₙ),
- a step of alternating, in a synchronized way for set of low bitrate streams (16₁, 16₂, ...16ₙ), the insertion of packets (1, 2,...44) of data with the insertion of synchronization packets (M1, M2, M3, M4) in these low bitrate streams (16₁, 16₂, ...16ₙ),
so that these low bitrate streams (16₁, 16₂, ...16ₙ) are transmitted in the intermediary network with a same low bitrate and a same alternation between, on one hand, the packets of data (1, 2,...44) and, on the other hand, the synchronization packets (M1, M2, M3, M4).

## Description

### Scope of the invention

The present invention relates to a method for processing a stream of multiplexed packets transporting multimedia data according to an MPEG-2 type format

Essentially the purpose of the invention is to propose a solution to simulate the transport of such a stream, at high bitrate, via an intermediary network having low bitrate transmission channels.

### Technological background of the invention

In the methods of the prior art usually implemented for the transmission of a stream of data between a digital transmitter and a digital receiver, the stream of data is constituted of a plurality of components multiplexed, in the form of packets, and incorporates synchronization data of the different components. Generally, the components considered are essentially of three types:
- video components, transporting information relating to the images to be displayed,
- audio components, transporting information relating to the sound to be recovered,
- other data that can be, in a general way, any type of private data, textual data intended to be displayed on the displayed images, it may concern for example sub-titles defined according to the standard DVB (Digital Video Broadcast) but also data using the teletext standard (that can itself, for example, be transported in MPEG-2 packets).

These different components are usually transported in a multiplexed way in a same stream of data using for example the DVB standard or the MPEG2 standard, this same stream being subsequently referred to as a high bitrate stream.

The high bitrate stream is then, following reception, demultiplexed and the different components are transmitted respectively to elementary decoding modules carrying out audio decoding, video decoding or "text" decoding for subtitles data.

### Problem of the prior art

A large number of MPEG-2 applications using high bitrate streams have higher and higher bitrates. This increase is particularly due to the development of protocols such as the Internet protocol "IP" or DVB protocols, for example DVB-S2 for "Satellite - Second Generation" or DNB-T2 for "Terrestrial - Second Generation".

However, the transport of this multimedia data must sometimes be assured, from their transmitter to their receiver, via an intermediary network for which the transmission channels have bitrates less than the high bitrate of the stream of data upstream and downstream of the intermediary network.

One solution known to resolve this problem uses a demultiplexing of the high bitrate stream upstream, that is to say at input, of the intermediary network in order to enable the transmission of packets from the high bitrate signal via more than one parallel channels. Next, at output from the intermediary network, a multiplexing of the signals transmitted by these parallel channels enables generation downstream of the intermediary network a new high bitrate stream.

But such a method does not guarantee that the signal multiplexed at the output of the intermediary network will be identical, to the closest bit, to the signal multiplexed at the input to the intermediary network.

However it may be necessary, as described later in the description of the invention, to obtain at the output of an intermediary network an identical multiplexed stream, to the closest bit, to the multiplexed signal received at the input to the intermediary network.

### General description of the invention

It is a purpose of the invention to overcome the problem which has just been referred to. Hence, the invention proposes a solution to enable simulation of the transmission of a high bitrate stream via an intermediary network for which the transmission channels have low bitrates.

This is why the invention relates to a method for processing a stream of multiplexed packets transporting multimedia data according to a format of MPEG-2 type, this stream being transmitted at a high bitrate to an intermediary network having transmission channels at a low bitrate, **characterized in that** the high bitrate stream is treated upstream of the intermediary network carrying out the following steps:
- a step of demultiplexing the high bitrate stream in order to insert packets of data in the low bitrate stream transmitted by the intermediary channels,
- a step of alternating, in a synchronized way for set of streams at low bitrate, the insertion of packets of data with the insertion of synchronization packets in these streams at low bitrate,
   so that these streams at low bitrate are transmitted in the intermediary network with a same low bitrate and a same alternation between, on one hand, the packets of data and, on the other hand, the synchronization packets.

Thanks to the invention, it is possible to simulate a transmission of a high bitrate stream via an intermediary network for which the transmission channels have low bitrates.

As a result, the low bitrate stream received at the output of the intermediary network can be multiplexed to generate, at output, a high bitrate stream identical to the closest bit to the high bitrate stream received at input from the intermediary network.

In other words, the invention enables simulation of the transmission of a high bitrate stream via an intermediary network without modifying the data received to the closest bit.

In addition to the main characteristics mentioned above, the method according to the invention can also present one or more of the additional characteristics below, considered individually or according to all technically possible combinations:

In one embodiment, the synchronization of the positioning of synchronization packets in the low bitrate stream is obtained by inserting simultaneously these synchronization packets in the low bitrate stream.

According to an embodiment, each synchronization packet transmits an identifier of the transmission channel in which it is inserted.

In one embodiment, a demultiplexer memory stores the packets of data from the demultiplexing of the high bitrate stream while a controller determines the introduction periods of these packets in the low bitrate stream.

According to an embodiment, a filler packet is inserted in a stream of low bitrate if no packet of data is ready to be inserted from the storage memory.

In an embodiment, the packets of data are successively allocated to different streams at low bitrate so that two successive packets of data are allocated to two distinct streams.

According to an embodiment, packets of data are allocated according to a predetermined distribution rule.

In one embodiment, a sequence number is allocated to synchronization packets, this sequence number being the same for synchronization packets inserted simultaneously.

According to an embodiment, the sequence number is increased between two successive synchronization packets of a same low bitrate stream.

In one embodiment, a temporal program reference (PCR) is inserted in the synchronization packets, this temporal reference being the same for synchronization packets inserted simultaneously.

According to an embodiment, the temporal program reference (PCR) is used as a sequence number.

In an embodiment, a same stream is transmitted in a redundant way according to two distinct transmission channels.

According to an embodiment, a same channel transmits a redundant stream with different channels according to time.

In one embodiment, a transmission channel transmits a low bitrate stream in a discontinuous way in time.

According to an embodiment, the intermediary network transports multimedia data according to an MPEG-2 type format.

The invention also relates to a method for generating a stream of multiplexed packets transporting multimedia data according to an MPEG-2 type format, this stream being transmitted at a high bitrate at output from an intermediary network having transmission channels at low bitrate, **characterized in that** the high bitrate stream is generated at output from the intermediary network carrying out the following steps:
- A step to extract, in a synchronized way for a set of streams at low bitrate, packets of data, and
- a step to multiplex these packets of data in a high bitrate stream using synchronization packets present in these streams at low bitrate.

The invention also relates to a demultiplexer intended to process a stream of multiplexed packets transporting multimedia data according to an MPEG-2 type format, this demultiplexer comprising the means to transmit the packets of data from the demultiplexing of the high bitrate stream via transmission channels at low bitrate,
**characterized in that** it comprises:
- The means to demultiplex the high bitrate stream and to insert packets of data in the low bitrate stream transmitted by the intermediary channels,
- The means to alternate, in a synchronized way for set of streams at low bitrate, the insertion of packets of data with the insertion of synchronization packets in these streams at low bitrate, so that these streams at low bitrate are transmitted in the intermediary network with a same low bitrate and a same alternation between, on one hand, the packets of data and, on the other hand, the synchronization packets according to a method in compliance with one of the preceding embodiments.

The invention also relates to a multiplexer intended to generate a stream of multiplexed packets transporting multimedia data according to an MPEG-2 type format, this high bitrate stream being generated from the stream transmitted by the channels at low bitrate, **characterized in that** it comprises the means to multiplex the streams at low bitrate transmitted by the intermediary channels in a high bitrate stream using synchronization packets inserted in these streams at low bitrate in such a way that these streams at low bitrate are transmitted in the intermediary network with a same low bitrate and a same alternation between, on one hand, the packets of data and, on the other hand, the synchronization packets according to a method in compliance with one of the preceding embodiments.

### Brief description of the figures:

Other characteristics and advantages of the invention will clearly emerge from the description provided below as a non-restrictive example, with reference to the different annexed figures in which:
- Figure 1 is a block diagram of a method according to the invention, and
- Figures 2 to 7 represent streams at low bitrate according to various embodiments of the invention.

### Description of at least one embodiment of the invention

The elements appearing on the different figures conserve, unless otherwise specified, the same references.

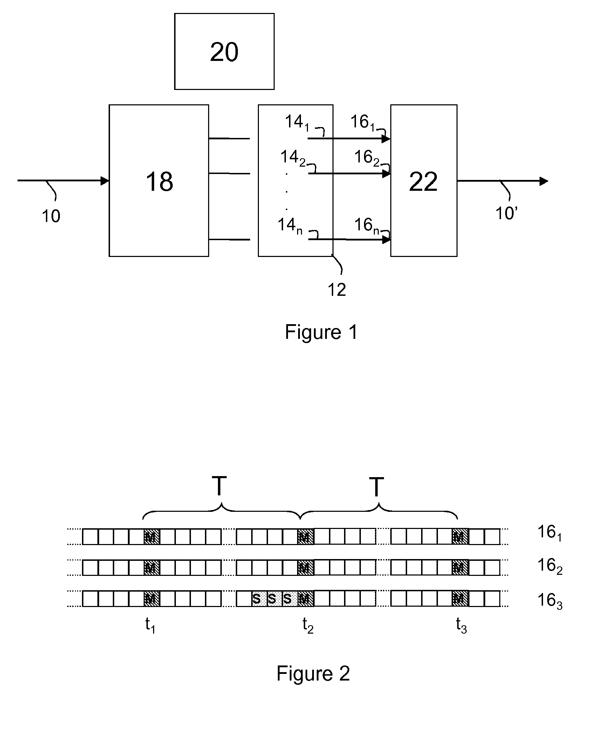

With reference to figure 1 a block diagram of the invention is described, namely the processing of a stream 10 at high bitrate aiming to assure its transport via an intermediary network 12, having transmission channels 14₁, 14₂, ... 14ₙ at low bitrate, so that a stream 10' provided downstream, that is to say at output, of an intermediary network is identical to the closest bit to a stream 10 received.

In accordance with the invention, this high bitrate stream 10 is a signal of multiplexed packets transporting multimedia data according to an MPEG-2 type format.

Upstream of the network, a demultiplexer memory 18 stores the packets of data from the demultiplexing of the stream 10 at high bitrate. Thus, a controller 20 can command the insertion of these packets of data in the low bitrate stream 16₁, 16₂, ...16ₙ transmitted via the intermediary network 12 to a multiplexer 22 situated at the output of an intermediary network 12.

From these streams 16₁, 16₂... 16ₙ at low bitrate, the multiplexer 22 generates a stream 10' identical to the closest bit, to the stream 10 received by the demultiplexer 18.

To enable the multiplexer to carry out this operation, the streams 16₁, 16₂ ...16ₙ at low bitrate respect the structure detailed in figure 2 according to which an insertion of synchronization packets M is carried out in a synchronized way for all the streams at low bitrate.

In this embodiment, this synchronization translates by the simultaneous nature of the insertion of synchronization packets M at instants t, t1, t2, ...tn.

These packets M enabling particularly the synchronization of the streams. Indeed, the packets can comprise a sequence number incrementing sequentially in such a way that an anterior packet (instant nt) will be numbered n while an ulterior packet M (instant (n + 1)t) will be numbered n+1.

For a simple application of this embodiment, it is possible to use the continuity counter place in the packet header, known as the: "packet header continuity counter"

In another embodiment, an additional counter is inserted in the body of the packet. This embodiment enables increasing the rate of repetition of synchronization packets while optimizing the processing of the synchronization.

For example, it must be recalled that the continuity index is currently defined on 4 bits, which enables definition of 16 values before a reset of the counter to 0. In this case, by inserting a packet M every 10 ms, a first intermediary signal delayed by more than 160 ms with respect to the second signals will present synchronization problems with these second signals. In other words, the maximum synchronization delay is 160 ms.

By using a counter on 8 bits, 256 values can be defined before the clock reset. In this case and considering an insertion every 10 ms, the phase difference tolerance is brought up to 2.56 sec.

The packets M also enable the transport of information used in the generation of streams at high bitrate 10' at the output of the intermediary network.

In fact, the synchronization packets M are in this embodiment MPEG-2 TS packets that have the capacity to transport a PCR in their adaptation field. This PCR value can be used in the place of an internal counter to enable the synchronization at the end of transmission replacing the continuity counter.

The synchronization packets M can also be used to facilitate the transport and the synchronization of the clock application of the receiver.

The position of the synchronization packet M is determined by the synchronization requirements.

The synchronization packets M are inserted with a predetermined period T (figure 2) that must correspond to a compromise between:
- A period T sufficiently heightened to minimise the impact on the bandwidth, and
- A period T sufficiently short to limit the synchronization delay.

Finally, it should be noted that each synchronization packet M comprises a transmission channel identifier into which it is inserted in addition to its identifier, in compliance with the MPEG-2 format, referred to as PID for "Packet Identification Data".

In order to avoid any risk of confusion between the PID of a packet M and a PID present in the high bitrate stream, a first embodiment of the invention imposes the absence of the PID allocated to a packet M in this high bitrate stream.

In a second embodiment of the invention, a remapping mechanism is implemented of the PID present in the high bitrate stream into a PID absent in this high bitrate stream.

In this latter case, it should also be assured that the coded PID is transmitted within a synchronization packet so that, during the reconstruction of the high bitrate stream, the initial value of the PID can be restored.

Moreover, as shown in figure 2, it is possible that no packet of data is available in the memory 18 even though a packet must be inserted in a stream to respect it low bitrate.

In this case, one or several filler packets S similar to the filler packets S of the MPEG-2 format are included in the low bitrate stream in the place of a packet of data.

The position of filler packets S between synchronization packets M is a priori without constraint. Hence, these filler packets S differ from MPEG2 TS filler packets that must regularly be inserted in the signal transmitted in order to maintain the transmission.

Due to these filler packets, the signal stream in the intermediary channels, can be maintained constant and identical for all the streams 16₁, 16₂ ...16ₙ at low bitrate.

The filler packets are also identified by a PID that is recognized at input and output of the intermediary network. At this stage, it should be noted that it is not necessary to use either a null packet 8191 specific to the MPEG-2 format or to modify such a packet when it is present in the high bitrate stream.

In order to avoid any risk of confusion with a PID present in the high bitrate stream, this PID present in the high bitrate stream can be coded in a new PID, the synchronization packets storing this PID in order to enable its recovery in the high bitrate stream 10'.

It is therefore designed to integrate the PID value of the filler packet S in a synchronization packet M so that a multiplexer at the output of the intermediary channels filters the filler packets generated in the intermediary network so as not to integrate them in the restored high bitrate stream.

In a first embodiment of the invention, distinct PIDs are used for the synchronization packets and for the filler packets. For example, M packets have a 8190 PID in the low bitrate network.

Likewise, it can also be decided that the PID of filler packets is 8189 then insert this information in the contents of a packet M.

In a second embodiment of the invention, the same PIDs are used for the two types of packet, which impacts on the stream of data to be transported. In this case, in the case of two packet types having a same PID value, 8190 for example, an analysis of their content enables a synchronization packet M to be distinguished from a filler packet S.

In this latter case, it is possible to provide a specific field in the packet body to distinguish the two packets and/or use the bits of the packet header (adaptation field control header) to differentiate between the two packet types. For example, the values 00 are attributed to the filler packet and the values 01 or 11 to the synchronization packet.

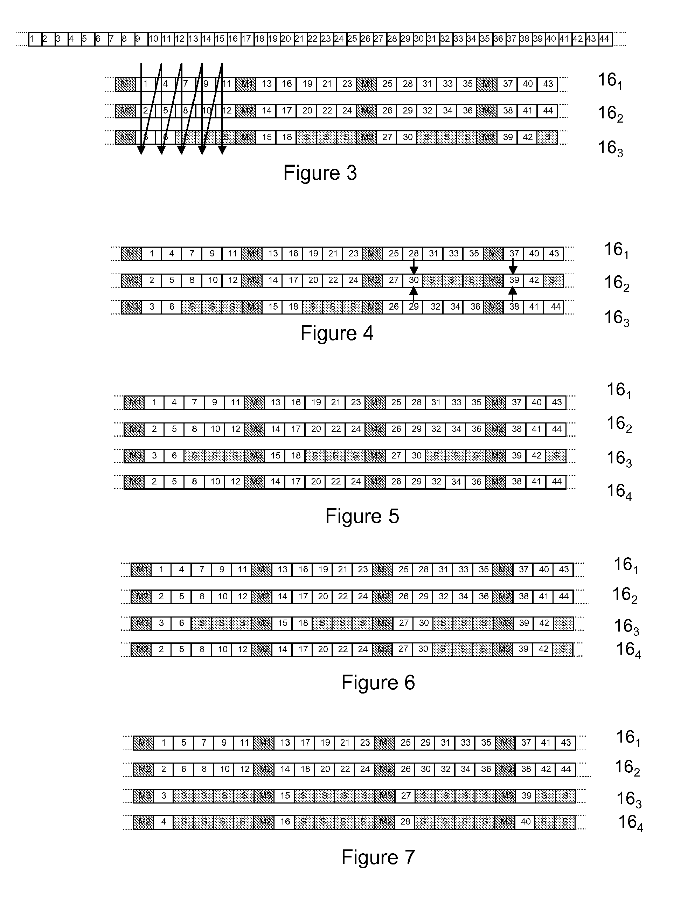

In reference to the figures 3 to 7 different embodiments are described to distribute the packets of data - identified by their sequence number - and the synchronization packets - identified by Mi where i is the number of the stream in which they are inserted.

On figure 3 is shown a first embodiment of the invention according to which the packets 1, 2, 3, 44 from a demultiplexed high bitrate signal have been successively allocated to the streams 16₁, 16₂ or 16₃, the order of allocation being represented by an arrow.

In this embodiment, the successive allocation of packets is carried out by ascending order of stream number, in a constant way in time, until a new cycle of allocations begins again.

Hence, this successive distribution of packets constitutes a predetermined distribution rule but other rules may be implemented in the scope of the invention.

Moreover, the intermediary channels can exchange their stream numbers on the occasion of the insertion of a synchronization packet M, which leads to a different reading of these latter as shown in figure 4.

Hence the order of reading of packets 1 to 24 (flux 16₁ then 16₂ then 16₃) is distinct from the order of reading of packets 25 to 44 (flux 16₁ then 16₃ then 16₂)

At this point, it should be noted that, for reasons of clarity, figures 2 to 7 do not show the sequence number allocated to the synchronization packets - this sequence number being the same for all the synchronization packets included simultaneously.

However, it should be considered that the synchronization packets carry a sequence number that increases between two successive synchronization packets of a same stream.

Likewise, a temporal program reference (PCR) can be included in the synchronization packets, this temporal reference being the same for all the synchronization packets M included simultaneously.

As shown in figure 5, it is also possible to transmit two redundant streams according to two distinct transmission channels. Hence, the stream 16₄ is identical to the stream 16₂, that can present advantages in terms of the signal transmission reliability.

In this case, in the presence of two streams having the same identifier, the multiplexer 22 only retains one of the two streams for the reconstruction of the stream 10'.

However, as shown in figure 6, it is possible that a redundant stream simulates a first stream 16₂ then a second stream 16₄.

Finally, as shown in figure 7, it is possible that a transmission stream 16₄ is used in a discontinuous manner in time.

Apart from the numerous variants described above, the invention therefore enables the transmission of different low bitrate streams to the multiplexer 22 situated at the output of the intermediary network 12.

The multiplexer 12 can, due to the presence of synchronization packets M, multiplex the low bitrate streams 16₁, 16₂, ...16ₙ to generate a high bitrate stream 10' identical, to the closest bit, to the stream 10 received at input.

Hence, the transmission of a stream 10 via an intermediary network having low bitrate distribution channels with respect to the bitrate of the stream received, has been simulated.

The invention can particularly be applied in the domain of the transmission of data by satellite where it can be advantageous to transport the high bitrate MPEG-2 streams (>50Mbps) by means of more than one transponders each having a lower bitrate (<50Mbps).

The present invention is susceptible to numerous variants. Hence, the invention is described below in an embodiment where the low bitrate network uses an MPEG-2 format. However, it is possible to vary the format used by this low bitrate network while enabling the implementation of the invention via a synchronization in the insertion of synchronization packets in intermediary channels.

## Claims

1. Method for processing a stream (10) of multiplexed packets transporting multimedia data according to a format of MPEG-2 type, this stream (10) being transmitted at a high bitrate to an intermediary network (12) having transmission channels (14₁, 14₂, ... 14ₙ) at a low bitrate, **characterized in that** the high bitrate stream (10) is treated upstream of the intermediary network (12) carrying out the following steps:
- a step of demultiplexing the high bitrate stream (10) in order to insert packets (1, 2,...44) of data in the low bitrate stream (16₁, 16₂, ...16ₙ) transmitted by the intermediary channels (14₁, 14₂, ... 14ₙ),
- a step of alternating, in a synchronized way for set of low bitrate streams (16₁, 16₂, ...16ₙ), the insertion of packets (1, 2,...44) of data with the insertion of synchronization packets (M1, M2, M3, M4) in these low bitrate streams (16₁, 16₂, ...16ₙ),
so that these low bitrate streams (16₁, 16₂, ...16ₙ) are transmitted in the intermediary network with a same low bitrate and a same alternation between, on one hand, the packets of data (1, 2,...44) and, on the other hand, the synchronization packets (M1, M2, M3, M4).

2. Method for processing according to claim 1, **characterized in that** the synchronization of the positioning of the synchronization packets (M1, M2, M3, M4) in the low bitrate streams (16₁, 16₂, ...16ₙ) is obtained by inserting simultaneously these synchronization packets (M1, M2, M3, M4) in the low bitrate streams (16₁, 16₂, ... 16ₙ).

3. Method according to claim 1 or 2, **characterized in that** each synchronization packet (M1, M2, M3, M4) transmits an identifier of the transmission channel in which it is inserted.

4. Method according to one of claims 1, 2 or 3, **characterized in that** a memory (18) stores the packets of data (1, 2,...44) from the demultiplexing of the high bitrate stream (10) while a controller (20) determines the introduction periods (T) of these packets (M1, M2, M3, M4) in the low bitrate streams (16₁, 16₂, ...16ₙ).

5. Method according to claim 4, **characterized in that** a filler packet (S) is inserted in a low bitrate stream (16₁, 16₂, ...16ₙ) if no packet of data (1 , 2,...44) is ready to be inserted from the storage memory (18).

6. Method according to one of the preceding claims, **characterized in that** the packets of data (1, 2,...44) are allocated successively to different low bitrate streams (16₁, 16₂, ... 16ₙ) in such a way that two successive packets of data are allocated to two distinct streams.

7. Method according to claim 6, **characterized in that** the packets of data (1, 2,...44) are allocated according to a predetermined distribution rule.

8. Method according to one of the preceding claims, **characterized in that** a sequence number is allocated to the synchronization packets (M1, M2, M3, M4), this sequence number being the same for the synchronization packets inserted simultaneously.

9. Method according to claim 8, **characterized in that** the sequence number is increased between two successive synchronization packets (M1, M2, M3, M4) of a same low bitrate stream (16₁, 16₂, ...16ₙ).

10. Method according to one of the preceding claims, **characterized in that** a program temporal reference (PCR) is inserted in the synchronization packets (M1, M2, M3, M4), this temporal reference being the same for the synchronization packets inserted simultaneously.

11. Method according to claims 8 and 10, **characterized in that** the program temporal reference (PCR) is used as a sequence number.

12. Method according to one of the previous claims, **characterized in that** a same stream is transmitted in a redundant way according to two distinct transmission channels.

13. Method according to claim 12, **characterized in that** a same channel transmits a redundant stream with different channels according to time.

14. Method according to one of the preceding claims, **characterized in that** a transmission channel transmits a low bitrate stream (16₄) in a discontinuous way in time.

15. Method according to one of the preceding claims, **characterized in that** the intermediary network transports multimedia data according to an MPEG-2 type format.

16. Method for generation of a stream (10') of multiplexed packets transporting multimedia data according to an MPEG-2 type format, this stream (10') being transmitted at a high bitrate to an intermediary network (12) having low bitrate transmission channels, **characterized in that** the high bitrate stream (10') is generated at the output of the intermediary network (12) carrying out the following steps:
- A step to extract, in a synchronized way for a set of low bitrate streams, packets of data, comprising :
- a step of filtering synchronization packets (M1, M2, M3, M4);
- a step of filtering filler packets (S);
- a step of filtering packets of transmission channels being redundant and
- A step to multiplex these packets of data in a high bitrate stream using synchronization packets present in these low bitrate streams (16₁, 16₂, ...16ₙ).

17. Demultiplexer (18) intended to process a stream (10) of multiplexed packets transporting multimedia data according to an MPEG-2 type format, this demultiplexer (18) comprising the means to transmit the packets of data from the demultiplexing of the high bitrate stream via low bitrate transmission channels, **characterized in that** it comprises:
- Means for demultiplexing the high bitrate stream (10) and to insert packets (1, 2,...44) of data in the low bitrate streams (16₁, 16₂, ... 16ₙ) transmitted by the intermediary channels (14₁, 14₂, ... 14ₙ),
- Means for alternating (20), in a synchronized way for set of low bitrate streams (16₁, 16₂, ...16ₙ), the insertion of packets (1, 2,...44) of data with the insertion of synchronization packets (M1, M2, M3, M4) in these low bitrate streams (16₁, 16₂, ...16ₙ), so that these low bitrate streams (16₁, 16₂, ...16ₙ) are transmitted in the intermediary network with a same low bitrate and a same alternation between, on one hand, the packets of data (1, 2,...44) and, on the other hand, the synchronization packets (M1, M2, M3, M4) according to a method in compliance with one of the preceding claims.

18. Multiplexer (22) intended to generate a stream (10') of multiplexed packets transporting multimedia data according to an MPEG-2 type format, this high bitrate stream (10') being generated from the streams (16₁, 16₂, ...16ₙ) transmitted by the low bitrate channels (14₁, 14₂, ... 14ₙ), **characterized in that** it comprises the means to multiplex the low bitrate streams (16₁, 16₂, ...16ₙ) transmitted by the intermediary channels (14₁, 14₂, ... 14ₙ) in a high bitrate stream (10') using synchronization packets (M1, M2, M3, M4) inserted in these low bitrate streams (16₁, 16₂, ... 16ₙ) in such a way that these low bitrate streams (16₁, 16₂, ...16ₙ) are transmitted in the intermediary network with a same low bitrate and a same alternation between, on one hand, the packets of data (1, 2,...44) and, on the other hand, the synchronization packets (M1, M2, M3, M4) according to a method in compliance with one of the claims 1 to 16.
